Europäisches Patentamt

European Patent Office

Office européen des brevets

(11) Publication number: **0 111 295**
**B1**

## (12) EUROPEAN PATENT SPECIFICATION

(45) Date of publication of patent specification: **01.04.87**

(21) Application number: **83112265.0**

(22) Date of filing: **06.12.83**

(51) Int. Cl.⁴: **G 21 C 15/24, F 04 D 29/14**

(54) Construction for securing sealing structure in boiling water reactor.

(30) Priority: **13.12.82 JP 216815/82**

(43) Date of publication of application:
**20.06.84 Bulletin 84/25**

(45) Publication of the grant of the patent:
**01.04.87 Bulletin 87/14**

(84) Designated Contracting States:
**AT DE GB**

(56) References cited:
**DE-A-2 042 072**
**DE-A-2 525 782**
**DE-B-2 017 415**
**FR-A-2 018 778**
**FR-A-2 073 593**

(73) Proprietor: **HITACHI, LTD.**
**6, Kanda Surugadai 4-chome Chiyoda-ku**
**Tokyo 100 (JP)**

(72) Inventor: **Ueda, Masayuki**
**Hitachi-Komeiryo 3745-2, Shimoinayoshi**
**Chiyodamura**
**Niihari-gun Ibaraki-ken (JP)**

(74) Representative: **Finck, Dieter et al**
**Patentanwälte v. Füner, Ebbinghaus, Finck**
**Mariahilfplatz 2 & 3**
**D-8000 München 90 (DE)**

Courier Press, Leamington Spa, England.

## Description

The present invention relates to a boiling water reactor having a core, a shroud surrounding said core, a pressure vessel accommodating said shroud, a pump unit disposed between the walls of said shroud and said pressure vessel, a motor case projected from the bottom of said pressure vessel, a motor encased by said motor case, a pump shaft through which said pump unit is drivingly connected to said motor, a stretch tube by which said pump unit is fixed to said motor case, and a sealing structure including an annular inflatable seal disposed in said motor case at the lower end of said stretch tube and adapted to be inflated by a fluid pressure to make a close contact with the peripheral surface of said pump shaft.

Generally, a boiling water reactor has a jet pump disposed in an annular passage formed between the outer periphery of a shroud surrounding the reactor core and the inner periphery of the pressure vessel. The jet pump is supplied with water of high pressure from a circulation pump disposed externally of the pressure vessel and causes a recirculation of water in the reactor core. This type of system is usually referred to as external forcible recirculating system. This system, however, involves various problems. Namely, the jet pump tends to suffer from cavitation. In addition, there is a fear that the water in the reactor core may be lost due to a rupture in the pipe through which the external circulation pump is connected to the pressure vessel of the reactor.

In order to overcome these problems, proposed is a system employing a recirculating pump built-in in the pressure vessel of the reactor, in which the body of the recirculating pump is mounted within the pressure vessel to cause the recirculation of the water within the reactor core as shown in US—A—3723247.

More specifically, in this type of water recirculating system, the pump unit is mounted in the pressure vessel of the reactor, while a wet-type motor for driving the pump unit is mounted in a motor case projected downwardly from the bottom of the pressure vessel. The motor is drivingly connected to the pump unit through a pump shaft so that the pump unit is driven by the motor to cause the recirculation of the water.

The pump shaft penetrates the wall of the pressure vessel. It is quite difficult to provide a liquid-tight seal in the gland portion of the pressure vessel wall penetrated by the pump shaft. Therefore, instead of forming the liquid-tight seal in the gland portion, the motor case has a liquid-tight construction for encasing the motor which is of the wet type. For disassembling this recirculation pump built-in in the pressure vessel for the purpose of, for instance, periodical inspection, the motor is withdrawn downwardly from the motor case, while the pump unit is extracted upwardly.

This disassembling, however, encounters a problem that the water in the reactor core is lost when the lid of the motor case is opened, because the motor case is filled with the water.

In order to obviate this problem, US—A—4256314 proposes the use of a sealing structure having an inflatable seal secured to the motor case. When the motor is demounted, the inflatable seal is inflated to closely contact with the pump shaft thereby to prevent the water from flowing outside. In disassembling the recirculation pump, the sealing structure is demounted from the motor case after the demounting of the motor and the demounting of the pump unit.

An equivalent structure is known from DE—A—2525782.

Accordingly, an object of the invention is to provide a construction for securing the sealing structure to the motor case in a boiling water reactor, improved to permit an easy and prompt mounting and demounting of the sealing structure.

This object is attained according to the invention by a construction for securing said sealing structure to said motor case comprising: opposing annular grooves and formed in the inner peripheral surface of said motor case and the outer peripheral surface of said sealing structure, and a radially expandable and contractable cut ring member fitted in said opposing annular grooves so as to detachably secure said sealing structure to said motor case.

In disassembling the recirculating pump built-in in the reactor, the motor is withdrawn downwardly after inflation of the inflatable seal to make the same closely contact with the outer peripheral surface of the pump unit. Then, the pressure in the seal is relieved and, thereafter, the pump unit is extracted upwardly together with the pump shaft. Finally, the sealing structure is withdrawn downwardly from the motor case. For separating the sealing structure from the motor case, the cut ring member is contracted radially inwardly. The mounting of the sealing structure is made by taking the reverse procedure. Thus, according to the invention, it is possible to easily and promptly mount and demount the sealing structure on and from the motor case and hence, to decrease the radioactive dosage on the workers. Conveniently said cut ring member is provided in its outer peripheral surface with a plurality of vertical grooves adapted to receive cooperating portions of a jig for causing a radial contraction of said cut ring member to permit the demounting of said sealing structure.

The lower ends of said vertical grooves in said cut ring member may be cut-away in conformity with the mating surfaces of said jig.

Advantageously said sealing structure includes an inner housing and an outer housing divided in the axial direction from each other with said inflatable seal clamped therebetween.

Preferably the surfaces of said inner housing and said outer housing clamping said inflatable seal oppose to each other in the axial direction and are perpendicular to the axis of said pump shaft.

The inflatable seal can be made of synthetic rubber.

Other objects, features and advantages of the invention will become more clear from the following description of the preferred embodiment taken in conjunction with the accompanying drawings.

Fig. 1 is a schematic vertical sectional view of a boiling water reactor;

Fig. 2 is a vertical sectional view of a water recirculation pump built-in in the reactor;

Fig. 3 is a vertical sectional view of a sealing structure in the mounted state;

Fig. 4 is a plan view of a ring member;

Fig. 5 is a sectional view taken along the line V—V of Fig. 4;

Fig. 6 is a partly-sectioned front elevational view of a demounting jig; and

Fig. 7 is vertical sectional view of the sealing structure in the demounting process.

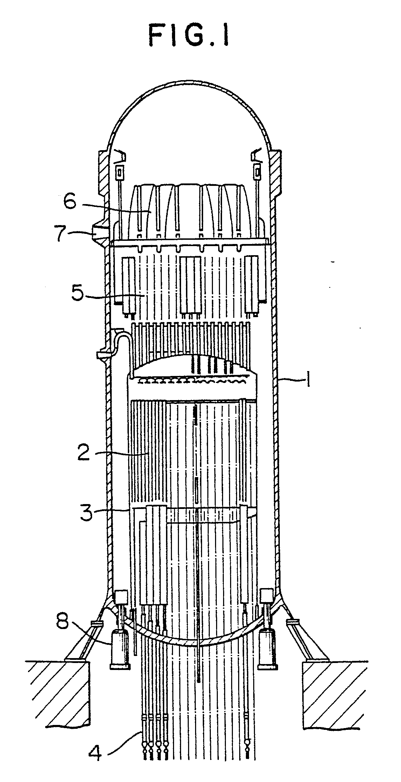

Referring first to Fig. 1 showing the whole part of a boiling water reactor, a reactor core 2 surrounded by a shroud 3 is accommodated in a pressure vessel 1 of the boiling water reactor. The reactivity in the core 2 is controlled by means of control rods 4 inserted into the core 2. The steam generated in the core 2 is sent to a gas-water separator 5 where the liquid phase is separated from the gaseous phase of the steam. The steam free of liquid phase is then dried by a steam drier 6 and is delivered to a turbine (not shown) through a main steam pipe via a main steam port 7.

A plurality of built-in type water recirculation pumps 8 are disposed along a circle on the bottom of the pressure vessel 1. These recirculation pumps 8 are adapted to cause recirculation of water within the pressure vessel 1.

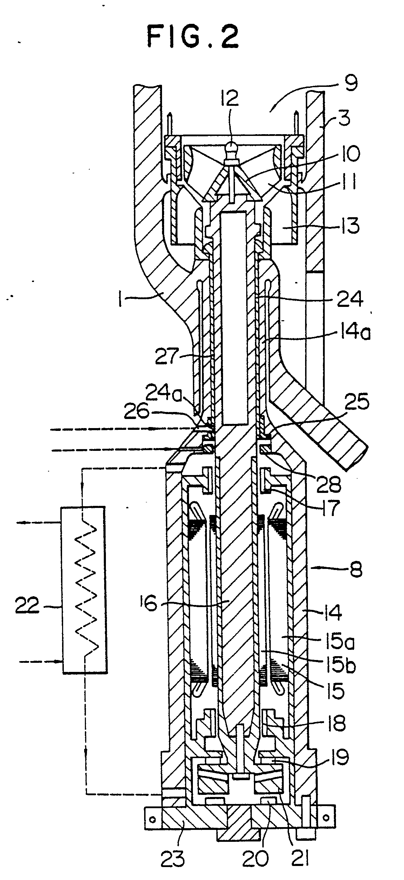

The construction of each recirculation pump will be explained hereinunder with specific reference to Fig. 2.

Referring to Fig. 2, a pump unit generally designated at 9 has a hub 10 provided with an impeller 11 having a plurality of impeller blades, and a member 12 for retaining a lifting member for lifting the pump unit 9. A diffuser 13 is disposed around the impeller 11.

This pump unit 9 is disposed in the annular passage formed between the inner surface of the pressure vessel 1 and the outer peripheral surface of the shroud 3. When the pump operates, the water is forced to flow from the upper side to the lower side through the pump unit 9 as viewed in this Figure. A motor case 14 is attached to the bottom of the pressure vessel 1 by welding. A wet-type motor 5 is disposed in the motor case 14. The motor 15 has a stator 15a and a rotor 15b. The motor 15 is drivingly connected to the impeller 11 through a pump shaft 16 which is supported by radial bearings 17, 18 and thrust bearings 19, 20. An auxiliary impeller 21 fixed to the end of the rotor shaft opposite to the pump shaft 16 operates to circulate the water through the motor case 14 and through an external heat exchanger 22 as shown by arrows. The heat exchanger 22 serves to maintain a constant water temperature in the motor case 14. The motor case 14 is closed by a motor case lid 23. A stretch tube 24 is fitted in the nozzle portion 14a of the motor case 14. The diffuser 13 mentioned before is fixed to the nozzle portion 14a through this stretch tube 24. More specifically, the diffuser 13 is firmly secured to the nozzle portion 14a as it is pulled downwardly by screwing up of a stretch tube nut 25 disposed at the lower end of the stretch tube 24.

A reference numeral 26 designates a purging water inlet. The purging water fed through this purge water inlet is introduced into the gap 27 formed between the stretch tube 24 and the pump shaft 16 through an opening 24a formed in the stretch tube 24. The purging water thus supplied prevents the communication between the water in the pressure vessel 1 and the water in the motor case 14 which may otherwise be made through the gap 27.

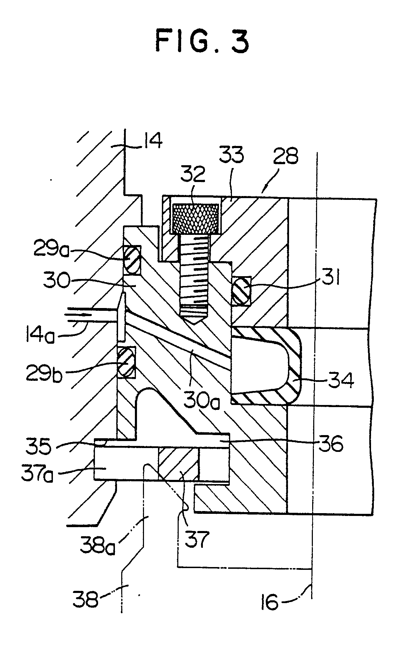

A sealing structure 28 is provided at the lower end of the stretch tube 24. As will be seen from Fig. 3, the sealing structure includes an outer housing 30 fitted on the inner surface of the motor case 14 through "O" rings 29a and 29b, an inner housing 33 secured to the outer housing 30 by bolts 32 through an "O" ring 31, and an inflatable seal 34 clamped between both housings 30 and 33.

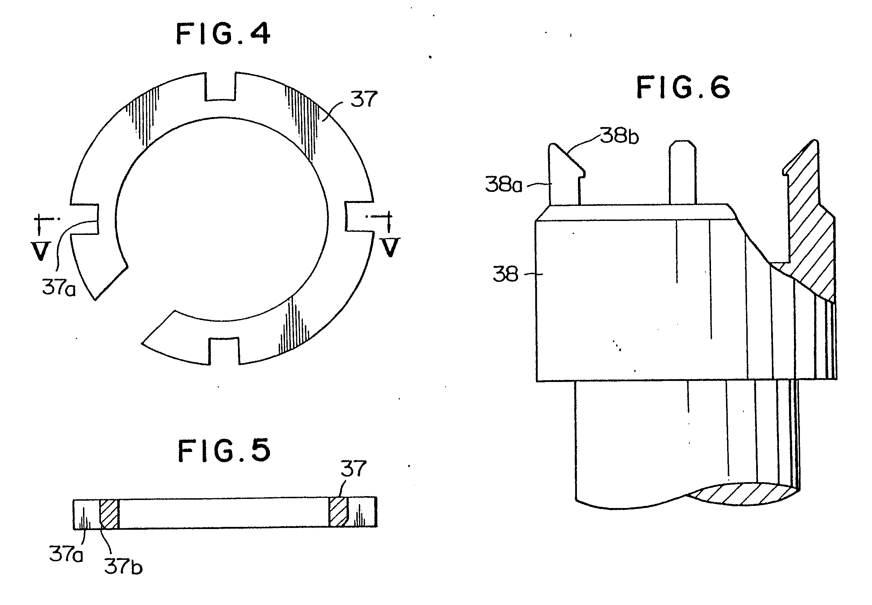

The inflatable seal 34 is made of an elastic material such as a synthetic rubber. A space defined by the inflatable seal 34 is communicated with a passage bore 30a formed in the outer housing 30 which in turn is connected to a passage bore 14a formed through the wall of the motor case 14. The passage bore 14a is connected to an external source of high-pressure water through a stop valve which is not shown. Opposing annular grooves 35 and 36 are formed in the inner peripheral surface of the motor case 14 and the outer peripheral surface of the outer housing 30. These opposing annular grooves 35 and 36 receive a cut ring member 37 which is provided in the outer peripheral surface thereof with a plurality of vertical grooves 37a as shown in Figs. 4 and 5.

During operation of the recirculation pump 8, the stop valve provided in the passage communicating the inflatable seal 34 with the external source of pressurized water is kept closed so that the pressurized water is not supplied to the inflatable seal 34. Therefore, the inflatable seal 34 is kept away from the outer peripheral surface of the pump shaft 16 so as not to hinder the rotation of the pump shaft 16.

The disassembling of the recirculation pump 8 is conducted in accordance with the following procedure. At first the stop valve mentioned above is opened to supply the inflatable seal 34 with the pressurized water through the passage bores 14a and 30a, so that the inflatable tube 34 is inflated to make a close contact with the outer peripheral surface of the pump shaft 16 thereby to form a liquid-tight seal between the pump shaft 16 and the motor case 14. Subsequently, the water in the motor case 14 is drained off and the motor 15 and associated parts are demounted.

Then, after making the water seal of the motor case 14, the pressurized water is relieved from the inflatable seal 34 to allow the seal 34 to get away from the outer peripheral surface of the pump shaft 16, and the pump unit 9 is extracted upwardly as a unit with the pump shaft 16. Then, after closing the bore in the diffuser 13 from which the pump shaft 16 has been withdrawn, the water is drained off again from the motor case 14 to permit the demounting of the sealing structure 28 and the stretch tube nut 25. Finally, the diffuser 13 and the stretch tube 24 are demounted after making the water seal of the motor case 14.

The demounting of the sealing structure 28 is made by using a demounting jig 38 as exemplarily shown in Fig. 6. The demounting jig 38 is provided with projections 38a each having a tapered portion 38b. In use, the projections 38a are slided into the vertical grooves 37a in the cut ring member 37 shown in Fig. 4 while making the tapered portions 38b thereof contact with the bottoms of the vertical grooves 37a. In order to facilitate the fitting of the demounting jig 38, the bottoms of the vertical grooves 37a are cut-away as at 37b for mating with the tapered portions 38b of the jig 38.

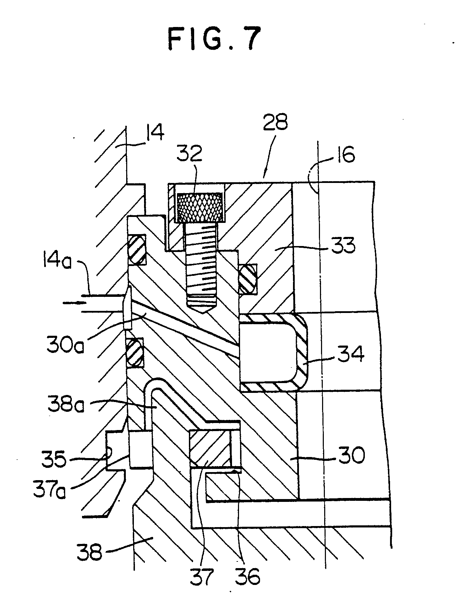

As the jig 38 is fitted to the cut ring member 37, the cut ring member 37 is contracted radially inwardly to come off from the annular groove 35 of the motor case 14 as shown in Fig. 7. The cut ring member 37 is then withdrawn together with the sealing structure 28 as the demounting jig 38 is pulled downwardly.

The mounting of the sealing structure 28 is conducted by taking the reverse procedure.

## Claims

1. A boiling water reactor having a core (2), a shroud (3) surrounding said core (2) a pressure vessel (1) accommodating said shroud, a pump unit (9) disposed between the walls of said shroud and said pressure vessel, a motor cae (14) projected from the bottom of said pressure vessel, a motor (15) encased by said motor case, a pump shaft (16) through which said pump unit is drivingly connected to said motor, a stretch tube (24) by which said pump unit is fixed to said motor cae, and a seling structure (28) including an annular inflatable seal (34) disposed in said motor case at the lower end of said stretch tube and adapted to be inflated by a fluid pressure to make a close contact with the peripheral surface of said pump shaft, characterized by a construction for securing said sealing structure (28) to said motor case (14) comprising: opposing annular grooves (35 and 36) formed in the inner peripheral surface of said motor case (14) and the outer peripheral surface of said sealing structure, and a radially expandable and contractable cut ring member (37) fitted in said opposing annular grooves so as to detachably secure said sealing structure to said motor case.

2. A boiling water reactor according to claim 1, wherein said cut ring member (37) is provided in its outer peripheral surface with a plurality of vertical grooves (37) adapted to receive cooperating portions of a jig (38) for causing a radial contraction of said cut ring member to permit the demounting of said sealing structure.

3. A boiling water reactor according to claim 2, wherein the lower ends (37b) of said vertical grooves (37a) in said cut ring member (37) are cutaway in conformity with the mating surfaces of said jig (38).

4. A boiling water reactor according to claim 1, wherein said sealing structure (28) includes an inner housing (33) and an outer housing (30) divided in the axial direction from each other with said inflatable seal (34) clamped therebetween.

5. A boiling water reactor according to claim 4, wherein the surfaces of said inner housing (33) and said outer housing (30) clamping said inflatable seal (34) oppose to each other in the axial direction and are perpendicular to the axis of said pump shaft (16).

6. A boiling water reactor according to claim 4, wherein said inflatable seal (34) is made of a synthetic rubber.

## Patentansprüche

1. Siedewasserreaktor mit einem Kern (2), einem den Kern (2) umgebenden Mantel (3), einem den Mantel aufnehmenden Druckbehälter (1), einer zwischen den Wänden des Mantels und des Druckbehälters angeordneten Pumpeneinheit (9), einem vom Boden des Druckbehälters vorstehenden Motorgehäuse (14), einem von dem Motorgehäuse umschlossenen Motor (15), einer Pumpenwelle (16), über wleche die Pumpeneinheit antriebsmäßig mit dem Motor verbunden ist, einem Streckrohr (24), durch welches die Pumpeneinheit an dem Motorgehäuse festgelegt ist, und mit einer Dichtungsanordnung (28), die eine ringförmige aufblähbare Dichtung (34) aufweist, die im Motorgehäuse am unteren Ende des Streckrohrs angeordnet ist und durch Fluiddruck so aufblähbar ist, daß sie in innigen Kontakt mit der Umfangsfläche der Pumpenwelle kommt, gekennzeichnet durch einen Aufbau zum Festlegen der Dichtungsanordnung (28) an dem Motorgehäuse (14), welcher gegenüberliegende ringförmige Nuten (35 und 36), welche in der inneren Umfangsfläche des Motorgehäuses (14) und der äußeren Umfangsfläche der Dichtungsanordnung ausgebildet sind, und ein radial ausdehnbares und zusammenziehbares Schlitzringelement (37) aufweist, das in die gegenüberliegenden ringförmigen Nuten so eingepaßt ist, daß die Dichtungsanordnung lösbar an dem Motorgehäuse festgelegt ist.

2. Siedewasserreaktor nach Anspruch 1, bei welchem das Schlitzringelement (37) in seiner äußeren Umfangsfläche mit einer Vielzahl von vertikalen Aussparungen (37a) für die Aufnahme von damit zusammenwirkenden Abschnitten einer Spanneinrichtung (38) für die Herbeiführung einer radialen Kontraktion des Schlitzringelements versehen ist, um die Demontage der Dichtungsanordnung zu ermöglichen.

3. Siedewasserreaktor nach Anspruch 2, bei welchem die unteren Enden (37b) der vertikalen Nuten (37a) in dem Schlitzringelement (37) in Übereinstimmung mit den zugeordneten Flächen der Spannvorrichtung (38) ausgeschnitten sind.

4. Siedewasserreaktor nach Anspruch 1, bei welchem die Dichtungsanordnung (28) ein inneres Gehäuse (33) und ein äußeres Gehäuse (30) aufweist, die in Axialrichtung voneinander geteilt sind, wobei die aufblähbare Dichtung (34) dazwischen eingeklemmt ist.

5. Siedewasserreaktor nach Anspruch 4, bei welchem die Oberflächen des inneren Gehäuses (33) und des äußeren Gehäuses (30), die die aufblähbare Dichtung (34) klemmend halten, einander in Axialrichtung gegenüberliegen und senkrecht zur Achse der Pumpenwelle (16) sind.

6. Siedewasserreaktor nach Anspruch 4, bei welchem die aufblähbare Dichtung (34) aus synthetischen Kautschuk hergestellt ist.

**Revendications**

1. Réacteur à eau bouillante comprenant un coeur actif (2), une enveloppe de protection (3) entourant ce coeur actif (2), une cuve sous pression (1) dans laquelle est logée cette enveloppe de protection, un ensemble de pompage (9) disposé entre les parois de l'enveloppe de protection et de la cuve sous pression, un carter de moteur (14) faisant saillie à partir de la partie inférieure de la cuve sous pression, un moteur (15) enfermé dans ce carter de moteur, un arbre de pompe (16) à l'aide duquel l'ensemble de pompage est relié à ce moteur de manière à être entraîné par lui, un tube de tension (24) à l'aide duquel l'ensemble de pompage est fixé sur le carter de moteur, et une structure d'étanchéité (28) comprenant un joint annulaire d'étanchéité gonflable (34) qui est disposé dans le carter de moteur à l'extrémité inférieure du tube de tension et est agencé de façon à pouvoir être gonflé à l'aide d'une pression de fluide de manière à réaliser un contact étroit avec la surface périphérique de l'arbre de pompe,

caractérisé par une structure qui permet de solidariser la structure d'étanchéité (28) avec le carter de moteur (14) et qui comprend des gorges annulaires en regard (35 et 36) ménagées dans la surface périphérique intérieure du carter de moteur (14) et dans la surface périphérique extérieure de la structure d'étanchéité, et une pièce (37) formée d'un anneau fendu pouvant se dilater et se contracter dans le sens radial et emboîtée dans ces gorges annulaires en regard de manière à solidariser d'une manière amovible la structure d'étanchéité avec le carter de moteur.

2. Réacteur à eau bouillante selon la revendication 1, dans lequel la pièce formée d'un anneau fendu (37) présente dans sa surface périphérique extérieure plusieurs rainures verticales (37a) qui sont agencées de façon à recevoir des parties complémentaires d'un outil de serrage (38) permettant de provoquer une contraction radiale de cet anneau fendu de façon à permettre le démontage de la structure d'étanchéité.

3. Réacteur à eau bouillante selon la revendication 2, dans lequel les extrémités inférieures (37b) des rainures verticales (37a) de la pièce formée d'un anneau fendu (37) sont taillées de façon à épouser les surfaces coopérantes de l'organe de serrage (38).

4. Réacteur à eau bouillante selon la revendication 1, dans lequel la structure d'étanchéité (28) comprend un boîtier intérieur (33) et un boîtier extérieur (30) qui sont séparés l'un de l'autre suivant la direction axiale et entre lesquels est serré le joint d'étanchéité gonflable (34).

5. Réacteur à eau bouillante selon la revendication 4, dans lequel les surfaces du boîtier intérieur (33) et du boîtier extérieur (30) qui serrent le joint d'étanchéité gonflable (34) se font face l'une l'autre suivant la direction axiale et sont perpendiculaires à l'axe de l'arbre de pompe (16).

6. Réacteur à eau bouillante selon la revendication 4, dans lequel le joint d'étanchéité gonflable (34) est réalisé en un caoutchouc synthétique.

# FIG. 1

# FIG. 2

# FIG. 3

# FIG.4

37

V

37a

V

# FIG.5

37

37a  37b

# FIG.6

38b

38a

38

# FIG. 7